**Europäisches Patentamt**

**European Patent Office**

**Office européen des brevets**

(19)

(11) Veröffentlichungsnummer: **0 192 809 B1**

# EUROPÄISCHE PATENTSCHRIFT

(12)

(45) Veröffentlichungstag der Patentschrift: **22.05.91**

(51) Int. Cl.⁵: **H04Q 7/04**

(21) Anmeldenummer: **85107393.2**

(22) Anmeldetag: **14.06.85**

(54) **Verfahren zum Normieren von Signalkanälen auf einen TDMA-Rahmen in einem Mobilfunksystem.**

(30) Priorität: **28.02.85 DE 3507029**

(43) Veröffentlichungstag der Anmeldung:
**03.09.86 Patentblatt 86/36**

(45) Bekanntmachung des Hinweises auf die
Patenterteilung:
**22.05.91 Patentblatt 91/21**

(84) Benannte Vertragsstaaten:
**DE FR GB IT NL SE**

(56) Entgegenhaltungen:
**EP-A- 0 036 146**
**EP-A- 0 046 938**
**EP-A- 0 048 866**
**FR-A- 2 493 646**
**US-A- 3 641 274**

(73) Patentinhaber: **ANT Nachrichtentechnik GmbH**
**Gerberstrasse 33**
**W-7150 Backnang(DE)**

(72) Erfinder: **Sperlich, Josef, Dipl.-Ing.**
**Kelterweg 52**
**W-7150 Backnang(DE)**

(74) Vertreter: **Wiechmann, Manfred, Dipl.-Ing.**
**ANT Nachrichtentechnik GmbH Gerberstras-**
**se 33 Postfach 11 20**
**W-7150 Backnang(DE)**

**Beschreibung**

Die vorliegende Erfindung betrifft ein Verfahren zum Normieren der in einer Feststation eines Mobilfunksystems empfangenen Signalkanäle, die von mobilen Teilnehmern ausgesendet worden sind und unterschiedliche Signallaufzeiten aufweisen, auf einen vorgegebenen, in mehrere Kanalzeitschlitze unterteilten Zeitmultiplex-Empfangsrahmen, wobei jeder Signalkanal mit einem Synchronwort beginnt.

Ein solches Mobilfunksystem, bei dem die von mobilen Teilnehmern ausgesendeten Signalkanäle in den Feststationen in TDMA (Vielfachzugriff im Zeitmultiplex)-Rahmen eingeordnet werden, ist bereits in der deutschen Patentanmeldung DE-A-3 426 561 vorgeschlagen worden.

Da die mobilen Teilnehmer im Funkverkehrsbereich einer Feststation unterschiedlich weit von der Feststation, in der die von den mobilen Teilnehmern ausgesendeten und blockweise übertragenen Signalkanäle empfangen werden, entfernt sind, ist es erforderlich, im Empfänger der Feststation die verschiedenen Signallaufzeiten auszugleichen.

Ein Verfahren zur Laufzeitanpassung, welches durch Ermittlung der Zeitdifferenz zwischen vorhergesagtem und tatsächlichem Empfangszeitpunkt eines Kanalkennungswortes den vorhergesagten Zeitpunkt korrigiert, ist aus der US-A-3 641274 bekannt.

Der Erfindung liegt nun die Aufgabe zugrunde, ein Verfahren der eingangs genannten Art anzugeben, nach dem die unterschiedlichen Laufzeiten der Signalkanäle ermittelt und an eine maximal mögliche Laufzeit angepaßt werden, so daß die Signalkanäle zeitlich auf die ihnen zugeordneten Kanalzeitschlitze eines vorgegebenen Zeitmultiplex-Empfangsrahmens normiert sind.

Erfindunggemäß wird diese Aufgabe durch die im Kennzeichen des Patentanspruchs 1 angegebenen Merkmale gelöst.

An Hand eines in der Zeichnung dargestellten Ausführungsbeispiels wird nachfolgend die Erfindung näher erläutert. Es zeigen:

Fig. 1    einen TDMA-Rahmenaufbau,
Fig. 2    den Rahmenaufbau mit Taktaufteilung für die Synchronworterkennung und
Fig. 3    ein Blockschema, welches den erfindungsgemäßen Verfahrensablauf darstellt.

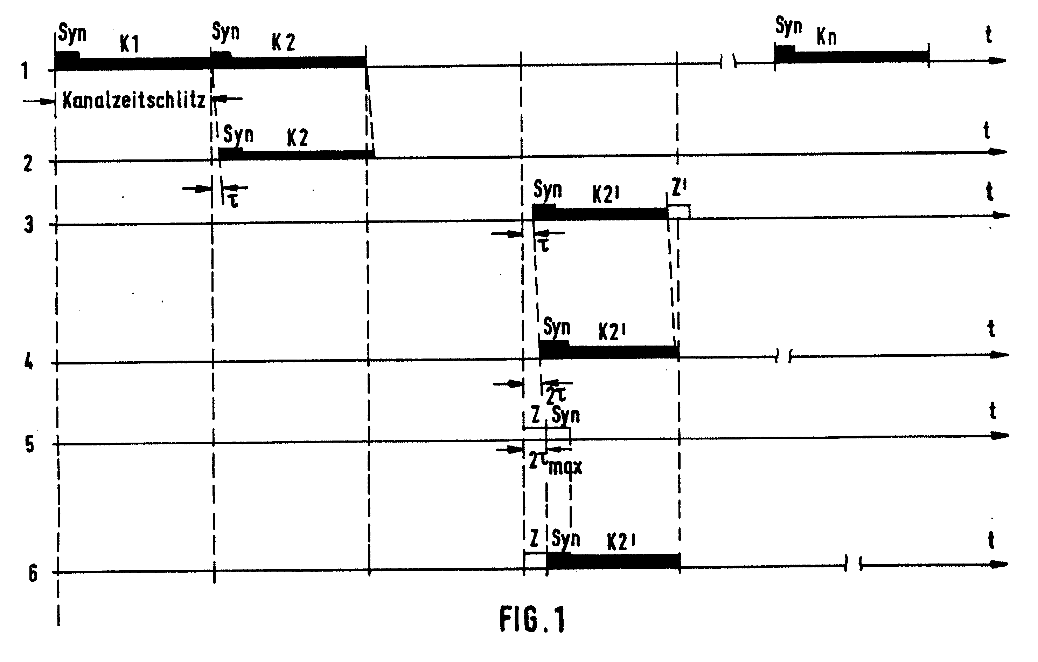

In der Fig. 1 zeigt die Zeile 1) einen TDMA-Senderahmen, der von einer Feststation an die in ihrem Funkverkehrsbereich sich aufhaltenden mobilen Teilnehmer ausgesendet wird. Der Rahmen ist in n Kanalzeitschlitze aufgeteilt. In jeden Kanalzeitschlitz kann ein mit einem Synchronwort Syn beginnender Signalkanal K1 ... Kn eingeordnet werden, welcher für einen bestimmten mobilen Teilnehmer eine Information enthält.

Die Zeile 2) verdeutlicht, daß z.B. der von der Feststation ausgesendete Signalkanal K2 bei seinem mobilen Teilnehmer um die Laufzeit $\tau$ gegenüber dem Beginn des diesem Signalkanal K2 im ursprünglichen Senderahmen zugeordneten Kanalzeitschlitzes verzögert ankommt.

Wie aus der Zeile 3) ersichtlich ist, sendet der mobile Teilnehmer seinen Signalkanal K2' zweckmäßigerweise um zwei Kanalzeitschlitze gegenüber dem empfangenen Signalkanal K2 verschoben zur Feststation aus. Bei der Feststation trifft der von dem mobilen Teilnehmer ausgesendete Signalkanal K2' um die Laufzeit $2\tau$ gegenüber dem Beginn des Kanalzeitschlitzes für den Signalkanal K2 im Senderahmen verzögert ein (vgl. Zeile 4). Die Gesamtlaufzeitverzögerung $2\tau$ setzt sich aus der Signallaufzeit $\tau$ von der Feststation zum mobilen Teilnehmer und der Signallaufzeit $\tau$ vom mobilen Teilnehmer zur Feststation zusammen. Befindet sich der mobile Teilnehmer am äußersten Rand des Funkverkehrsbereichs der Feststation, so tritt die größt mögliche Gesamtlaufzeitverzögerung $2\tau_{max}$ auf.

Gemäß der Darstellung in Zeile 5) muß also spätestens nach der maximal möglichen Laufzeit von $2\tau_{max}$ bezogen auf den Beginn des Kanalzeitschlitzes im Senderahmen das Synchronwort Syn des Signalkanals K2' erscheinen. Je nach Abstand des mobilen Teilnehmers von der Feststation, trifft das Synchronwort Syn innerhalb eines Zeitbereichs ein, der sich aus dem Zeitabschnitt z, welcher der maximal möglichen Signallaufzeit $2\tau_{max}$ entspricht, und der Synchronwortlänge zusammensetzt. Zur Weiterleitung und Verteilung des empfangenen Signalkanals K2' ist es erforderlich, ihn zeitnormiert in einen Empfangsrahmen (vgl. Zeile 6) einzuordnen, dessen Kanalzeitschlitzraster auf den des Senderahmens abgestimmt ist. Bei der weiter unten noch näher beschriebenen Normierung wird der in der Feststation empfangene Signalkanal K2', bevor er in den Empfangsrahmen eingeordnet wird, zeitlich gegenüber dem Beginn seines Kanalzeitschlitzes soweit verzögert, daß der Abstand zwischen dem Synchronwort Syn und dem Beginn des Kanalzeitschlitzes der maximal möglichen Laufzeit $z = 2\tau_{max}$ entspricht.

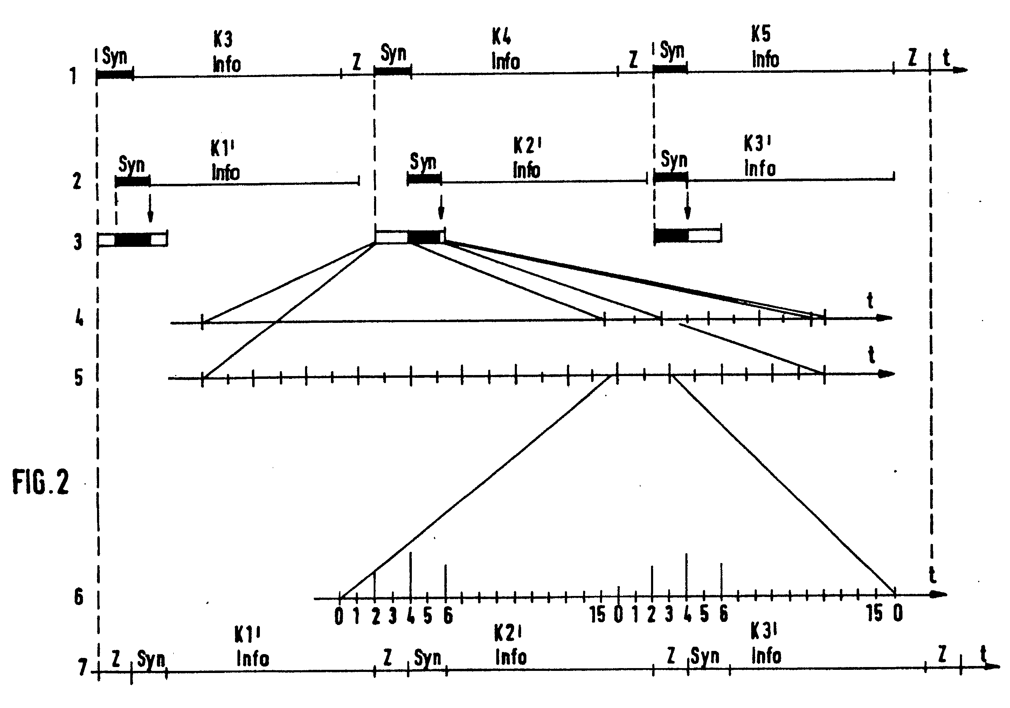

Die Fig 2 zeigt in Zeile 1) einen mit Signalkanälen K3, K4 und K5 belegten Ausschnitt eines von einer Feststation an mobile Teilnehmer übertragenen Senderahmens, wobei jeder Signalkanal mit einem Synchronwort Syn beginnt, und daran sich die eigentliche Information anschließt. Hinter dem Informationsteil Info folgt ein Zeitbereich z, der die Länge der oben erläuterten maximal möglichen Signallaufzeit $z = 2\tau_{max}$ besitzt. Bei der Übertragung der Signalkanäle von der Feststation zu den mobilen Teilnehmern kann der Zeitbereich z mit Information für die mobilen Teilnehmer belegt werden. Wie bereits gesagt, dient dieser Zeitbereich z bei der Übertragung in die Gegenrichtung der Normierung der Signalkanäle auf die Kanalzeitschlitze des Empfangsrahmens.

In der Zeile 2) sind drei in der Feststation empfangene Signalkanäle K1', K2', K3' mit unterschiedlichen Laufzeiten dargestellt.

Das Synchronwort Syn am Anfang eines jeden Signalkanals trifft in jedem Fall, wie in Zeile 3) und am Beispiel von Kanal K2' aufgefächert in Zeile 4) gezeigt, in einem Zeitraum im Empfänger der Feststation ein, der am Anfang des Kanalzeitschlitzes des Senderahmens beginnt und sich über die Dauer des Synchronwortes und des der maximal möglichen Signallaufzeit entsprechenden Zeitbereichs z erstreckt. In diesem in Zeile 4) dargestellten Zeitraum kann also das Synchronwort erkannt werden, weshalb der Zeitraum als Synchronwort-Erkennungsbereich bezeichnet wird.

Um die Lage des Synchronwortes in dem Synchronwort-Erkennungsbereich bestimmen zu können, wird der Synchronwort-Erkennungsbereich, wie in Zeile 5) dargestellt, in mehrere Bittaktschritte aufgeteilt. Für die Ermittlung des aus mehreren Bits bzw. in dem vorliegenden Ausführungsbeispiel aus mehreren Dibits bestehenden Synchronwortes wird jeder Bittaktschritt des Synchronwort-Erkennungsbereiches in mehrere Untertaktschritte unterteilt. Die Zeile 6) zeigt einen Dibittaktschritt (2 Bittaktschritte), von dem jeder einzelne Bittaktschritt hier in 16 (0 ... 15) Untertaktschritte aufgeteilt ist.

In jedem Untertaktschritt jedes Bittaktschrittes in dem Synchronwort-Erkennungsbereich wird der empfangene Signalkanal abgetastet. Aus den Nummern der Untertaktschritte und Bittaktschritte, in denen Abtastwerte vorliegen, die das Synchronwort richtig wiedergeben, kann, wie später noch ausführlich erläutert wird, die Lage des Synchronwortes innerhalb des Synchronwort-Erkennungsbereiches und damit die Laufzeit des Signalkanals bestimmt werden.

Untertaktschritte, in denen die Abtastwerte die jeweils richtigen Bitwerte des Synchronwortes wiedergeben, sind in der Zeile 6) mit längeren senkrechten Strichen gekennzeichnet. Das in Zeile 6) verdeutlichte Beispiel zeigt, daß innerhalb eines Bittaktschrittes in mehreren nebeneinanderliegenden Untertaktschritten Abtastwerte vorliegen können, die einen Bitwert des Synchronwortes richtig wiedergeben. Das liegt daran, daß jedes Bit bzw. Dibit des übertragenen Signalkanals durch einen Signalpegel, von endlicher zeitlicher Dauer realisiert ist.

Wenn die Signallaufzeit des empfangenen Signalkanals ermittelt worden ist, wenn also bekannt ist, in welchem Abstand vom Beginn des auf das Kanalraster des Senderahmens abgestimmten Kanalschlitzes das Synchronwort des Signalkanals liegt, kann der Signalkanal zeitlich auf den ihm zugeordneten Kanalschlitz des in Zeile 7) dargestellten Empfangsrahmens normiert werden.

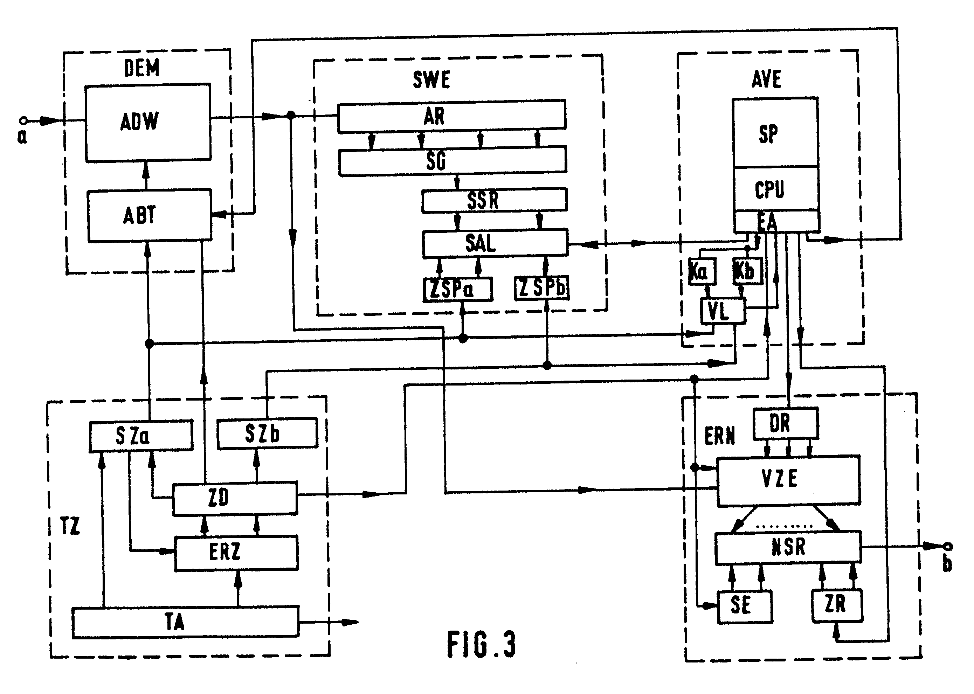

Nach welchem Verfahren nun die Normierung der empfangenen Signalkanäle und die dazu erforderliche Synchronworterkennung und Bestimmung der Signallaufzeit abläuft, soll nun an Hand des in Fig. 3 dargestellten Blockschemas erläutert werden.

Den zeitlichen Ablauf des Verfahrens steuert eine Takt- und Zählereinrichtung TZ, in der eine Taktaufbereitungsanordnung TA aus einem für das gesamte Mobilfunksystem maßgeblichen Systemtakt von z.B. 2048 KHz alle nötigen Takte für die Demodulation DEM der empfangenen Signalkanäle, die Synchronworterkennung SWE, die Abtast- und Verzögerungszeitermittlung AVE und die Empfangsrahmennormierung ERN ableitet.

In der Takt- und Zähleinrichtung TZ zählt ein Empfangsrahmenzähler ERZ die Bittaktschritte des Empfangsrahmens, auf den die empfangenen Signalkanäle normiert werden sollen. Dieser Empfangsrahmenzähler ERZ beginnt jeweils seinen Zählvorgang um zwei Kanalzeitschlitze gegenüber dem Beginn des Senderahmens versetzt [vgl. Fig. 1, Zeile 2) und 3)]. Nach Erreichen seines Zählerendstandes, der der Anzahl der Bittaktschritte eines Rahmens entspricht, fängt der Empfangsrahmenzähler ERZ wieder von vorn an zu zählen.

Ein Synchronisierzähler SZa durchläuft jeweils von Beginn bis zum Ende eines jeden Bittaktschrittes z.B. 16 Zählzustände (0 ... 15), welche der Anzahl der Untertaktschritte entspricht, in die jeder Bittaktschritt unterteilt werden soll [vgl. Fig. 2, Zeile 6)].

Ein anderer Synchronisierzähler SZb zählt von Beginn eines jeden Kanalzeitschlitzes des Empfangsrahmens an die zu dem festliegenden Synchronwort-Erkennungsbereich [vgl. Fig. 2, Zeile 5)] gehörenden Bittaktschritte durch.

Die beiden Synchronisierzähler SZa und SZb erhalten ihre Zählstartimpulse von einer Zähler-Dekodierlogik ZD, die aus dem Empfangsrahmenzähler ERZ den Beginn eines jeden Bittaktschrittes und den Beginn eines jeden Kanalzeitschlitzes ableitet und auch die Kanalzeitschlitze durchnummeriert. Die aktuelle Nummer des Kanalzeitschlitzes übergibt die Zähler-Dekodierlogik ZD an die Abtast- und Verzögerungszeit-Ermittlung AVE.

Im Demodulator DEM wird ein am Eingang a anliegender empfangener Signalkanal von einem Analog-Digital-Wandler ADW in ein Digitalsignal umgesetzt. Dabei wird der empfangene Signalkanal zu Zeitpunkten, welche eine Auswahlschaltung für die Abtastzeitpunkte ABT bestimmt, abgetastet und die Abtastwerte werden in Digitalsignale umgewandelt. Kann das empfangene Signal z.B. vier verschiedene Signalzustände annehmen, so setzt der Analog-Digital-Wandler ADW jeden Abtastwert in ein Dibit um.

Die Auswahlschaltung für die Abtastzeitpunkte ABT veranlaßt innerhalb des Synchronwort-Erkennungsbereichs zu jedem zweiten vom Synchronisierzähler SZa abgegebenen Zählimpuls, also zu jedem zweiten Untertaktschritt, eine Abtastung des empfangenen Signalkanals.

Die am Ausgang des Analog-Digital-Wandlers ADW erscheinenden digitalisierten Abtastwerte des empfangenen Signalkanals werden bitweise in ein Abtastwertregister AR übergeben. Sofern jeder Abtastwert in ein Dibit umgesetzt wird, besteht das Abtastwertregister AR aus zwei parallelen Schieberegistern. Von jedem Dibit wird dann das erste Bit an das eine Schieberegister und das zweite Bit an das andere Schieberegister übergeben und mit jedem Abtasttakt um eine Stelle im Schieberegister weitergeschoben.

Besteht das Synchronwort am Anfang eines jeden Signalkanals z.B. aus 4 Dibits (8 Bits) und wird in einem Dibittaktschritt 16 mal abgetastet, so sind zur Synchronworterkennung in jedem Schieberegister des Abtastwertregisters AR mindestens 3 x 16 Speicherstellen erforderlich. Bits, die durch das Abtastwertregister AR hindurchgeschoben werden, gehen verloren.

Von dem Schieberegister (bzw. den beiden Schieberegistern) des Abtastwertregisters AR sind, ausgehend von dem Beispiel mit 16 Abtastfakten pro Dibittaktschritt, die den Bitwerten des 0., des 16., des 32. und des 48. Untertaktschrittes zugeordneten Speicherstellen mit den Eingängen eines Synchronwortgatters SG verbunden. Dieses Synchronwortgatter SG gibt an seinem Ausgang dann eine logische "1" ab, wenn in den genannten Speicherstellen (0, 16, 32, 48) Bitwerte vorliegen, die mit denen des vorgegebenen Synchronwortes übereinstimmen.

Sobald am Ausgang des Synchronwortgatters SG eine logische "1" anliegt, ein Synchronwort also vollständig und richtig erkannt worden ist, wird die "1" in ein Synchronschieberegister SSR übernommen. In das Synchronschieberegister SSR werden soviele logische "1" hineingeschoben, wie aufeinander-folgende Abtastwerte innerhalb eines jeden zum Synchronwort gehörenden Dibittaktschrittes den richtigen Bitwert liefern. Das Synchronschieberegister SSR hat soviele Speicherplätze wie innerhalb eines Dibittaktschrittes maximal hintereinander Abtastwerte auftreten können, die alle den richtigen Bitwert wiedergeben.

Eine Synchronwort-Auswertelogik SAL sorgt dafür, daß zum Zeitpunkt der Übernahme der ersten logischen "1" in das Synchronschieberegister SSR der augenblickliche Zählerstand der Synchronisierzähler SZa und SZb in Zwischenspeicher ZSPa und ZSPb übernommen werden. Der Zählerstand des Synchronisierzählers SZb gibt zu diesem Zeitpunkt die Nummer desjenigen Bittaktschrittes im Synchronwort-Erkennungsbereich an, in dem das letzte Bit des Synchronwortes richtig erkannt worden ist.

Der im Zwischenspeicher ZSPa abgelegte Zählerstand wird nun mit jeder weiteren in das Synchronschieberegister eingeschobenen logischen "1" um einen Zählschritt erhöht, jedoch nur solange wie hintereinander ununterbrochen logische "1" folgen. Da der empfangene Signalkanal während des Synchronwort-Erkennungsbereichs nur zu jedem zweiten vom Synchronisierzähler SZa gezählten Untertaktschritt abgetastet wird [vgl. Fig. 2, Zeile 6)] , kann auch nur zu jedem zweiten Untertaktschritt eine logische "1" in das Synchronschieberegister SSR hineingeschoben werden. Würden beispielsweise zum 2., 4. und 6. Untertaktschritt logische "1" in das Synchronschieberegister SSR eingeschoben, weil die Abtastwerte in diesen Untertaktschritten das Synchronwort richtig wiedergeben [vgl. Fig. 2, Zeile 6)] , so würde in den ZwischenspeicherZSPa zunächst eine 2 eingeschrieben, welche der Nummer des Untertaktschrittes entspricht, zu dem die erste von den drei logischen "1" in dem Synchronregister SSR erscheint. Bei den nächsten beiden zu den Untertaktschritten 4 und 6 erscheinenden logischen "1" zählt der Zwischenspeicher ZSPa um zwei Schritte auf 4 hoch. Der nun im Zwischenspeicher ZSPa vorliegende Zählerstand 4 gibt die Nummer des Untertaktschrittes an, der von allen Untertaktschritten (2, 4, 6) mit richtigen Abtastwerten der mittlere ist. Erfährt der Zwischenspeicher Sta in dieser Zählfolge einen Überlauf d.h. zählt er z.B. von 15 auf 0, so wird dadurch der Zählerstand des Zwischenspeichers SZb um einen Schritt hochgezählt.

Mit dem beschriebenen Zählverfahren im Zwischenspeicher ZSPa läßt sich in dem Zeitabschnitt eines jeden Bittaktschrittes, wo alle Abtastungen den richtigen Bitwert liefern, der mittlere Abtastzeitpunkt bestimmen. Die nach dem Synchronwort folgende Information des Signalkanals wird nun in jedem Bittaktschritt in dem Untertaktschritt mit der im Zwischenspeicher ZSPa vorliegenden Nummer abgetastet, denn dieser Untertaktschritt ist der optimale Zeitpunkt für eine möglichst fehlerfreie Abtastung.

Die Schiebevorgänge im Abtastwertregister AR und im Synchronschieberegister SSR werden beendet, sobald die erste in das Synchronschieberegister SSR übergebene logische "1" bis in den letzten Speicherplatz durchgeschoben worden ist. Zu diesem Zeitpunkt ergeht auch die Aufforderung an die Abtast- und Verzögerungszeit-Ermittlung AVE, die Zählerstände der Zwischenspeicher ZSPa und ZSPb in einen zu der Abtast- und Verzögerungszeit-Ermittlung gehörenden Speicher SP zu übernehmen. In diese Speicher SP sind nämlich für jeden Kanalzeitschlitz Speicherplätze vorgesehen, in denen die Zählerstände der Zwischenspeicher ZSPa und ZSPb abgelegt werden, welche die zeitliche Lage des dem jeweiligen Kanalzeitschlitz zugeordneten Synchronwortes angeben.

Trifft bis zum Ende des Synchronwort-Erkennungsbereichs, d.h. bis der Synchronisierzähler SZb seinen Endzählerstand erreicht und vor dem Beginn eines neuen Zählzyklus steht, im letzten Speicherplatz des Synchronschieberegisters SSR keine logische "1" ein, so erhält die Abtast- und Verzögerungszeit-Ermittlung AVE die Mitteilung, daß das Synchronwort nicht erkannt worden ist.

Der Speicher SP in der Abtast- und Verzögerungszeit-Ermittlung enthält außerdem für jeden Kanalzeitschlitz ein sogenanntes Synchronwortzählregister. Dieses Synchronwortzählregister erhöht immer dann seinen Zählerstand um einen Schritt bis zu einem Höchststand von z.B. 8, wenn das Synchronwort des dem Kanalzeitschlitz zugeordneten Signalkanals richtig erkannt worden ist, bzw. es erniedrigt seinen Zählerstand um einen Schritt allenfalls bis auf Null, wenn das Synchronwort nicht oder nicht korrekt erkannt worden ist.

Zu Beginn eines jeden Kanalzeitschlitzes, der der Abtast- und Verzögerungszeit-Ermittlung AVE von der Zähler-Dekodierlogik ZD signalisiert wird, wird der Zählerstand des Synchronwortzählregisters abgefragt. Ist der Zählerstand gleich oder größer als z.B. 3, d.h. ist in mindestens drei vorangegangenen Rahmenzeiten innerhalb eines Kanalzeitschlitzes das Synchronwort richtig erkannt worden, so läuft folgendes Verfahren ab:
Die dem jeweiligen Kanalzeitschlitz zugeordneten, bereits früher im Speicher SP der Abtast- und Verzögerungszeit-Ermittlung AVE abgespeicherten Zählerstände der Zwischenspeicher ZSPa und ZSPb werden nun für die Abtastung des nach dem Synchronwort folgenden Informationsteil und für die zeitliche Normierung des empfangenen Signalkanals auf den Empfangsrahmen ausgenutzt. Dabei wird der Zählerstand des Zwischenspeichers ZSPa, der die Nummer des dem günstigsten Abtastzeitpunktentsprechenden Untertaktschrittes angibt, an die Auswahlschaltung für die Abtastzeitpunkte ABT übergeben. Und es wird die Bittaktschrittdifferenz, welche ein zentraler Rechner CPU aus der vorgegebenen Zahl der Bittaktschritte des gesamten Synchronwort-Erkennungsbereiches und der Nummer des Bittaktschrittes (entspricht abgespeichertem Zählerstand von ZSPb), in dem das letzte Bit des Synchronwortes richtig erkannt worden ist, ermittelt hat, an die Empfangsrahmennormierungseinrichtung ERN übergeben. Diese Bittaktschrittdifferenz gibt an, um wieviele Bittaktschritte der empfangene Signalkanal verzögert werden muß, damit er die für die Normierung auf den Empfangsrahmen erforderliche Zeitlage erhält.

Mit der Übergabe der abgespeicherten Zählerstände an die Auswahlschaltung für die Abtastzeitpunkte ABT und an die Empfangsrahmennormierungseinrichtung ERN beginnen diese Einrichtungen mit den erhaltenen Informationen noch nicht sofort zu arbeiten, sondern erst dann, wenn eine Vergleichslogik VL in der Abtast- und Verzögerungszeit-Ermittlung AVE ein Signal abgibt.

Und zwar liefert die Vergleichslogik VL dann ein Signal, wenn der Zählerstand des die Untertaktschritte durchzählenden Synchronisierzählers SZa mit dem Inhalt eines Koinzidenzregisters Ka und der Zählerstand des die Bittaktschritte des Synchronwort-Erkennungsbereiches durchzählenden Synchronisierzählers SZb mit dem Inhalt eines Koinzidenzregisters Kb übereinstimmt. Unmittelbar nach der Übergabe der im Speicher SP vorliegenden Informationen an die Auswahlschaltung für die Abtastzeitpunkte ABT und die Empfangsnormierungseinrichtung ERN füllt der zentrale Rechner CPU das Koinzidenzregister Ka mit einem Zählerstand, der gegenüber dem im Speicher SP befindlichen Zählerstand des Zwischenspeichers ZSPa um die halbe Anzahl der zu einem Bittaktschritt (bzw. Dibittaktschritt) gehörenden Untertaktschritteerhöht ist. In das Koinzidenzregister Kb wird der im Speicher SP vorliegende Zählerstand des Zwischenspeichers ZSPb, der die Nummer des Bittaktschrittes mit dem letzten Bit des Synchronwortes angibt, eingeschrieben. Der Zählerstand im Koinzidenzregister Kb erhöht sich um einen Schritt, wenn bei der Bestimmung des Zählerstandes im Koinzidenzregister Ka durch Addition des im Speicher vorliegenden Zählerstandes aus dem Zwischenspeicher ZSPa um die halbe Untertaktschrittzahl eines Bittaktschrittes der Zählerstand von einem Zählzyklus in den nächsten übergeht.

Dieser zuletzt beschriebene Verfahrensschritt gewährleistet, daß die Abtastung und Zeitnormierung der Bits des Informationsteils des empfangenen Signalkanals rechtzeitig einsetzt ohne daß auch nur ein Bit des Informationsteils nach dem Synchronwort dabei übergangen wird. Nachdem die Vergleichslogik VL ein Signal abgegeben hat, veranlaßt die Auswahlschaltung für die Abtastzeitpunkte ABT jedesmal dann eine Abtastung des empfangenen Signalkanals, wenn der an sie aus dem Speicher SP übergebene Zählerstand mit dem des Synchronisierzählers SZa übereinstimmt.

Ist der Zählerstand des Synchronwortzählregisters im Speicher SP kleiner als z.B. 3, so läuft das folgende Verfahren ab:
Die nach der Synchronworterkennung vorliegenden aktuellen Zählerstände der Zwischenspeicher ZSPa und ZSPb werden von der Abtast- und Verzögerungszeit-Ermittlung AVE übernommen. Der Zählerstand des Zwischenspeichers ZSPa wird dann direkt an die Auswahlschaltung für die Abtastzeitpunkte ABT weitergeleitet, und aus dem Zählerstand des Zwischenspeichers ZSPa und der Gesamtzahl der Bittaktschritte des Synchronwort-Erkennungsbereichs wird die Bittaktschrittdifferenz gebildet und diese Differenz an die Empfangsrahmennormierungseinrichtung ERN übergeben. In diesem Fall werden also nicht die früher ermittelten und im Speicher SP abgelegten Zählerständefür die Abtastung und Normierung herangezogen, und es werden auch nicht die Koinzidenzregister Ka und Kb geladen.

Ist der Zählerstand des Synchronwortzählregisters im Speicher SP größer oder gleich 1, so werden bei Abweichung der aktuellen Zählerstände der Zwischenspeicher ZSPa und ZSPb von den früheren im Speicher SP vorliegenden Zählerständen, falls die Abweichung nicht zu groß ist, die aktuellen Zählerstände zu einer Korrektur der gespeicherten Zählerstände herangezogen. In der Regel kommt eine Korrektur von höchstens einem Untertaktschritt in Frage, da ein mobiler Teilnehmer seine Entfernung zur Feststation und sich damit die Signallaufzeit innerhalb einer Rahmendauer nur um Bruchteile eines Taktschrittes ändert. Hat das Synchronwortzählregister den Zählerstand 0, so werden die aktuellen Zählerstände der Zwischenspeicher ZSPa und ZSPb ohne Vergleich mit früher aufgenommenen Zählerständen in den Speicher SP der Abtast- und Verzögerungs-Ermittlung AVE übernommen.

Wird ein Synchronwort nicht oder nicht fehlerfrei erkannt, werden die im Speicher SP vorhandenen Zählerstände nicht verändert und erst gelöscht, wenn der Synchronwortzähler den Zählerstand "Null" aufweist. Beim Zählerstand "Null" des Synchronwortzählers wird registriert, daß der betreffende Kanalzeitschlitz zur Zeit nicht belegt ist.

Über eine Eingabe-Ausgabeeinheit EA der Abtast- und Verzögerungszeit-Ermittlung AVE erhält die Empfangsrahmennormierungseinrichtung ERN alle für sie wichtigen Informationen.

Die Empfangsrahmennormierungseinrichtung ERN besteht aus einem Bittaktschrittdifferenz-Register DR, einem Verzögerungseinsteller VZE einem Normierungsschieberegister NSR, einem Zusatzinformationsregister ZR und einer Einheit SE zur Synchronworteinspeisung.

Das Bittaktschrittdifferenz-Register DR übernimmt zu jedem Kanalzeitschlitz die in der Abtast- und Verzögerungszeit-Ermittlung AVE bestimmte Bittaktschrittdifferenz, welche angibt um wieviele Bittaktschritte ein empfangener Signalkanal verzögert werden muß, damit er in seinem Kanalzeitschlitz des Empfangsrahmens zum spätest möglichen Empfangszeitpunkt beginnt.

Diese für die zeitliche Normierung des empfangenen Signalkanals auf den Empfangsrahmen erforderliche Verzögerung bewirkt der Verzögerungseinsteller VZE, welcher den Empfangsrahmentakt von der Taktaufbereitung TA, die Informationsbits des empfangenen Signalkanals von dem Analog-Digital-Wandler ADW, die Bittaktschrittdifferenz von dem Bittaktschrittdifferenz-Register DR und ein Kanalzeitschlitzstartsignal mit der jeweiligen Kanalnummer von der Zähler-Dekodierlogik ZD erhält.

Mit dem Kanalzeitschlitzstartsignal werden die während der Übernahme der Informationsbits vom Analog-Digital-Wandler ADW im Zusatzinformationsregister ZR abgelegten, in der Abtast- und Verzögerungszeit-Ermittlung AVE berechneten Angaben darüber, ob das Synchronwort erkannt wurde und in welcher Entfernung sich der mobile Teilnehmer von der Teststation befindet etc., von dem Normierungsschieberegister NSR übernommen. Ebenfalls wird das generierte Synchronwort aus der Einheit SE zur Synchronworteinspeisung in das Normierungsschieberegister NSR eingeschrieben. Gleichzeitig mit dem Kanalzeitschlitzstartsignal wird die Informationsübernahme vom Analog-Digital-Wandler unterbrochen. Noch während, aber spätestens unmittelbar nachdem diese in das Normierungsschieberegister NSR übernommene Information durch die Schiebevorgänge an den Empfangsrahmenausgang b abgegeben worden ist, trifft von der Abtast- und Verzögerungszeit-Ermittlung AVE die Bittaktschrittdifferenz im Bittaktschrittdifferenz-Register DR ein. Dies bewirkt die erneute Übernahme der Informationsbits vom Analog-Digital-Wandler ADW und deren Einschreiben in das Normierungsschieberegister NSR. Dabei gibt die Bittaktschrittdifferenz an, wieviele Schieberegister-Speicherplätze vom Ausgang des Normierungsschieberegisters NSR entfernt das jeweils vom Analog-Digital-Wandler ADW übernommene Bit eingeschrieben werden muß. Diesen Einschreibevorgang steuert der Verzögerungseinsteller VZE. Wenn der Abtast- und Verzögerungszeit-Ermittlung AVE gemeldet wird, daß kein Signalkanal empfangen worden ist, so wird von dem Verzögerungseinsteller VZE unmittelbar nach dem Synchronwort bis zum Erscheinen des nächsten Kanalzeitschlitzstartsignals quasistatistische Information anstelle der vom Analog-Digital-Wandler ADW zu übernehmenden Information in den betreffenden Kanalzeitschlitz des Empfangsrahmens eingeblendet. Die quasistatistische Information erleichtert in nachfolgenden signalverarbeitenden Einrichtungen die Takthaltung.

Die nach dem oben beschriebenen Verfahren ermittelte Laufzeit der Signale zwischen einem mobilen Teilnehmer und einer Feststation, in deren Funkverkehrsbereich sich der mobile Teilnehmer gerade aufhält, kann dazu ausgenutzt werden, um beim mobilen Teilnehmer eine an die jeweilige Entfernung von der Feststation zeitlich angepaßte Aussendung der Signalbursts vorzunehmen, so daß der mobile Teilnehmer bei einer geringen Entfernung von der Feststation seine Signalbursts mit einer großen Zeitverzögerung und bei einer weiteren Entfernung mit einer geringeren Zeitverzögerung aussendet.

Die von der Feststation zum mobilen Teilnehmer bzw. umgekehrt übertragenen Signalkanäle sind entweder Nutzsignalkanäle (Daten, Sprache) oder Organisationskanäle (Anweisungen, Quittungen über empfangene Telegramme etc.), welche immer mit einem Synchronwort beginnen.

Die Organisationskanäle sind in der Regel in Kurztelegramme, in welchen kurze spontane Meldungen vom mobilen Teilnehmer an die Feststation abgesetzt werden, und in längere Standardtelegramme unterteilt, welche für den Austausch ausführlicherer Informationen zwischen der Feststation und dem mobilen Teilnehmer und umgekehrt dienen.

Die Zeitschlitzdauer der Kurztelegramme ist so lang, daß neben dem für die eigentliche Information erforderlichen Bitblock und dem Synchronwort auch noch Bittaktschritte für die gesamte Signallaufzeit vorhanden sind.

In Standardtelegrammen wird von der Feststation aus dem mobilen Teilnehmer u.a. mitgeteilt, ob und um wieviele Stufen die Sendesignalverzögerung für Standardtelegramme der Gegenrichtung oder die Signalbursts der Nutzkanäle unmittelbar nach dem Umschalten vom Organisations- auf den Nutzsignalkanal geändert werden soll.

In den Nutzsignalkanälen ist eigens ein Bitblock für daten- oder sprachbegleitende Signalisierung, auch Inbandsignalisierung genannt, vorhanden. Mit dieser Inbandsignalisierung wird von der Feststation aus dem mobilen Teilnehmer während der Übertragung im Nutzkanal mitgeteilt, ob und um wieviele Stufen die Sendersignalverzögerung geändert werden soll.

Wird in der Feststation das Synchronwort eines von einem mobilen Teilnehmer ausgesendeten Kurztelegramms am Anfang des Synchronwort-Erkennungsbereiches erkannt, der mobile Teilnehmer sich also in unmittelbarer Nähe befindet, so signalisiert die Feststation dem mobilen Teilnehmer in einem Standardtelegramm, daß er seine weiteren Signalbursts mit der Gesamtdauer des vorgegebenen Verzögerungszeitbereiches gegenüber dem Beginn seines ihm zugeordneten Kanalzeitschlitzes verzögert aussenden soll. Entfernt sich der mobile Teilnehmer nun weiter von der Feststation, d.h. rückt das in der Feststation erkannte Synchronwort gegen das Ende des für Kurztelegramme vorgehaltenen Gesamt-Synchronwort-Erkennungsbereiches, so wird dem mobilen Teilnehmer signalisiert, seine weiteren Signalbursts mit einer Teildauer des vorgegebenen Verzögerungsbereiches gegenüber dem Beginn seines ihm zugeordneten Kanalzeitschlitzes verzögert auszusenden. Die Verzögerungszeit für die auszusendenden Nutzkanal- und Standard-Organisationskanal-Signalbursts läßt sich beim mobilen Teilnehmer in Stufen herauf- oder herunterschalten.

Dadurch brauchen für Standard-Organisations- und Nutzsignalkanäle entsprechend weniger Bittaktschritte für den Laufzeitausgleich vorgehalten zu werden und die Einbuße an Übertragungskapazität ist entsprechend geringer.

Jede Verzögerungszeitstufe muß kürzer sein als die in Fig. 1 bzw. 2 mit z gekennzeichnete Laufzeit. Der Grund hierfür liegt darin, daß die Anweisung zur Änderung der Verzögerungszeitverkürzung an den mobilen Teilnehmer bereits gegeben werden muß, bevor das Signal an einer Grenze des Laufzeitbereiches z eintrifft, und daß nach der Verzögerungszeitumschaltung das Synchronwort nicht vor Beginn des Synchronwort-Erkennungsbereichs eintreffen darf, bzw. sich über dessen Ende erstreckt.

## Ansprüche

1. Verfahren zum Normieren der in einer Feststation eines Mobilfunksystems empfangenen Signalkanäle, die von mobilen Teilnehmern ausgesendet worden sind und unterschiedliche Signallaufzeiten aufweisen, auf einen vorgegebenen, in mehrere Kanalzeitschlitze unterteilten Zeitmultiplex-Empfangsrahmen, wobei jeder Signalkanal mit einem Synchronwort beginnt, dadurch gekennzeichnet,

a) daß jeder der den Empfangsrahmen zeitlich aufteilenden Bittaktschritte in Untertaktschritte unterteilt wird,

b) daß jeder empfangene Signalkanal in mehreren Untertaktschritten innerhalb all der Bittaktschritte abgetastet wird, die zu einem am Anfang eines jeden Kanalzeitschlitzes vorgesehenen Synchronwort-Erkennungsbereiches gehören, dessen Wortlänge sich aus den Bits des Synchronwortes und mehreren der maximal möglichen Signallaufzeit entsprechenden Bits zusammensetzt, und die Abtastwerte digitalisiert werden,

c) daß diese digitalisierten Abtastwerte mit dem Bitmuster des fest vorgegebenen Synchronwortes verglichen werden,

d) daß, sobald das Synchronwort in irgendeinem Abschnitt des Synchronwort-Erkennungsbereiches aus den digitalisierten Abtastwerten erkannt worden ist, ermittelt wird, im wievielten ab dem Beginn des Synchronwort-Erkennungsbereichs gezählten Bittaktschritt das letzte Bit des vollständigen Synchronwortes als richtig erkannt worden ist und im wievielten ab Beginn eines Bittaktschrittes gezählten Untertaktschritt ein den richtigen in diesem Bittaktschritt vorliegenden Bitwert wiedergebender Abtastwert aufgetreten ist,

e) daß in allen Bittaktschritten nach dem Synchronwort der empfangene Signalkanal in dem gleichen Untertaktschritt abgetastet wird, der vorher für die richtige Abtastung des Synchronwortes ermittelt worden ist, und

f) daß aus dem vorher ermittelten Bittaktschritt, welcher den Abstand des letzten Bits des Synchronwortes vom Anfang des Synchronwort-Erkennungsbereiches angibt, und der Gesamtzahl der Bittaktschritte des Synchronwort-Erkennungsbereiches die Differenz gebildet wird und jeder empfangene Signalkanal um soviele Bittaktschritte verzögert ausgegeben wird, wie die für ihn ermittelte Bittaktschrittdifferenz angibt.

2. Verfahren nach Anspruch 1, dadurch gekennzeichnet, daß, wenn in mehreren nebeneinanderliegenden Untertaktschritten eines Bittaktschrittes die Abtastwerte das gleiche richtige Synchronwortbit dieses Bittaktschrittes wiedergeben, die Nummer desjenigen Untertaktschrittes ermittelt wird, der in der Mitte dieser nebeneinanderliegenden Untertaktschritte liegt, und daß der empfangene Signalkanal in jedem Bittaktschritt nach dem Synchronwort jeweils nur in dem Untertaktschritt mit der ermittelten Nummer abgetastet wird.

3. Verfahren nach Anspruch 2, dadurch gekennzeichnet, daß das Synchronwort des empfangenen Signalkanals in jedem Bittaktschritt nur zu jedem zweiten Untertaktschritt abgetastet wird, daß die Nummer desjenigen Untertaktschrittes, zu dem in allen vom Synchronwort belegten Bittaktschritten der erste das jeweilige Synchronwortbit richtig wiedergebende Abtastwert erscheint, in einen Zwischenspeicher eingeschrieben wird und daß diese in dem Zwischenspeicher stehende Nummer bei jedem weiteren das jeweilige Synchronwortbit richtig wiedergebenden Abtastwert um "1" erhöht wird.

4. Verfahren nach einem der vorhergehenden Ansprüche, dadurch gekennzeichnet, daß bei einem für jeden einzelnen Kanalzeitschlitz des Empfangsrahmens zuständigen Synchronwortzählregisters der Zählerstand um einen Schritt erhöht wird, wenn das Synchronwort des dem zugehörigen Kanalzeitschlitz zugeordneten Signalkanals richtig erkannt worden ist, und um einen Schritt erniedrigt wird, wenn das Synchronwort nicht oder nicht korrekt erkannt worden ist, daß, wenn der Zählerstand oberhalb einer vorgegebenen Zahl liegt, die Abtastung des empfangenen Signalkanals auf die von einem früher empfangenen Signalkanal abgeleitete und abgespeicherte Nummer des den optimalen Abtastzeitpunkt wiedergebenden Untertaktschrittes eingestellt wird und aus der früher abgespeicherten, die Lage des Synchronwortes wiedergebenden Bittaktschrittnummer und der Gesamtzahl der Bittaktschritte des Synchronwort-Erkennungsbereiches die Differenz gebildet wird, und daß, wenn der Zählerstand unterhalb der vorgegebenen Zahl liegt, die Abtastung des empfangenen Signalkanals auf die aktuell ermittelte Untertaktschrittnummer ohne vorherigen Vergleich mit einer früher abgespeicherten Untertaktschrittnummer eingestellt, aus der aktuell ermittelten Bittaktschrittnummer ohne vorherigen Vergleich mit einer früher abgespeicherten Bittaktschrittnummer und aus der Gesamtzahl der Bittaktschrittedes Synchronwort-Erkennungsbereiches die Differenz gebildet wird und die aktuell ermittelten Nummern des Bittaktschrittes und des Untertaktschrittes abgespeichert werden.

5. Verfahren nach Anspruch 4, dadurch gekennzeichnet, daß die aktuell ermittelten Nummern des Bittaktschrittes und des Untertaktschrittes, welche die Lage des Synchronwortes in dem Synchronwort-Erkennungsbereich angeben, mit den von einem früher empfangenen Signalkanal abgeleiteten und abgespeicherten Nummern verglichen werden und bei Abweichung der aktuellen Nummern von den früher abgespeicherten Nummern eine Korrektur der gespeicherten Nummern vorgenommen wird.

6. Verfahren nach einem der vorhergehenden Ansprüche, dadurch gekennzeichnet, daß, wenn das Synchronwortzählregister den Zählerstand Null hat, die aktuellen Nummern des Bittaktschrittes und des Untertaktschrittes, welche die Lage des Synchronwortes in dem Synchronwort-Erkennungsbereich angeben, ohne Vergleich mit früher ermittelten Nummern abgespeichert werden.

7. Verfahren nach Anspruch 1, dadurch gekennzeichnet, daß, nachdem die Signallaufzeit zwischen einem mobilen Teilnehmer und der Feststation ermittelt worden ist, dem mobilen Teilnehmer von der Feststation aus signalisiert wird, seine Signale in Abhängigkeit von der Signallaufzeit um soviele Bittaktschritte gegenüber dem Beginn des dem mobilen Teilnehmer zugeordneten Kanalschlitzes verzögert auszusenden, daß die Signalverzögerung bei der kleinstmöglichen Entfernung des mobilen Teilnehmers von der Feststation der Gesamtdauer eines vorgegebenen Verzögerungszeitbereichs entspricht und mit zunehmender Entfernung die Signalverzögerung entsprechend geringer ist.

8. Verfahren nach Anspruch 7, dadurch gekennzeichnet, daß der zur Verfügung stehende Verzögerungszeitbereich in mehrere Stufen unterteilt ist, auf die vom mobilen Teilnehmer die Verzögerungszeit der auszusendenden Signale eingestellt werden kann.

9. Verfahren nach einem der vorhergehenden Ansprüche, dadurch gekennzeichnet, daß zwischen einem mobilen Teilnehmer und der Feststation neben Nutzsignalkanälen auch Organisationssignalkanäle, welche sich aus Kurz- und Standardtelegrammen zusammensetzen, übertragen werden, und daß auf Grund der in der Feststation ermittelten Laufzeit der Kurztelegramme dem mobilen Teilnehmer von der Feststation aus die entsprechend einzustellende Signalverzögerung für die Standardtelegramme und die Nutzsignalkanäle über Standardtelegramme mitgeteilt wird.

10. Verfahren nach einem der vorhergehenden Ansprüche, dadurch gekennzeichnet, daß Änderungen der beim mobilen Teilnehmer einzustellenden Signalverzögerung während einer Nutzsignalkanalübertragung oder beim Wechsel des mobilen Teilnehmers zur Feststation einer anderen Funkzelle diesem über einen den Nutzsignalkanal begleitenden Signalisierungskanal mitgeteilt werden.

11. Verfahren nach einem der vorhergehenden Ansprüche, dadurch gekennzeichnet, daß in den Zeitschlitzen der vom mobilen Teilnehmer zur Feststation übertragenen Nutzsignalkanäle und der Standardtelegramme der Organisationssignalkanäle ein Bereich für den Laufzeitausgleich vorgesehen ist, der um mindestens einen Bittaktschritt grösser ist als eine Stufe des einstellbaren Verzögerungszeitbereichs.

## Claims

1. Method for the normalising of the signal channels, which are received in a fixed station of a mobile radio system, have been transmitted by mobile subscribers and display different signal transit times, to a given time multiplex reception frame subdivided into several channel time slots, wherein each signal channel begins with a synchronising word, characterised thereby,

a) that each of the bit beat steps dividing the reception frame up in time is subdivided into sub-beat steps,

b) that each received signal channel is scanned in several sub-beat steps within all the bit beat steps which belong to a synchronising word recognition region, which is provided at the beginning of each channel time slot and the word length of which is composed of the bits of the synchronising word and several of the bits corresponding to the maximum possible signal transit time, and the scanning values are digitalised,

c) that these digitalised scanning values are compared with the bit pattern of the fixedly given synchronising word,

d) that as soon as the synchronising word has been recognised from the digitalised scanning values in any portion of the synchronising word recognition region, it is determined in which bit beat step - counted from the beginning of the synchronising word recognition region - the last bit of the complete synchronising word has been recognised as correct and in which sub-beat step - counted from the beginning of a bit beat step - a scanning value has occurred, which reproduces the correct bit value present in this bit beat step,

e) that the received signal channel is scanned in the same sub-beat step, which had previously been determined for the correct scanning of the synchronising word, in all bit beat steps after the synchronising word and

f) that the difference is formed between the previously determined bit beat step, which indicates the spacing of the last bit of the synchronising word from the beginning of the synchronising word recognition region, and the total number of the bit beat steps of the synchronising word recognition region and each received signal channel is issued delayed by as many bit beat steps as indicated by the bit beat step difference determined for it.

2. Method according to claim 1, characterised thereby, that when the scanning values in several mutually adjoining sub-beat steps of a bit beat step reproduce the same correct synchronising word of this bit beat step, the number of that sub-beat step is determined, which lies in the centre of these mutually adjoining sub-beat steps and that the received signal channel is scanned in each bit beat step after the synchronising word each time only in the sub-beat step with the number that had been determined.

3. Method according to claim 2, characterised thereby, that the synchronising word of the received signal channel is scanned only at each second sub-beat step in each bit beat step, that the number of that sub-beat step, at which in all the bit beat steps occupied by the synchronising word appears the first scanning value correctly reproducing the respective synchronising word bit, is written into an intermediate store and that this number standing in the intermediate store is increased by "1" for each further scanning value correctly reproducing the respective synchronising word bit.

4. Method according to one of the preceding claims, characterised thereby, that the counter state is increased by one step in a synchronising word register appropriate for each individual channel time slot of the reception frame when the synchronising word of the signal channel allocated to the associated channel time slot has been recognised correctly and is decreased by one step when the synchronising word has not been recognised or not been recognised correctly, that - when the counter state lies above a predetermined number - the scanning of the received signal channel is set to the number, which has been derived from a signal channel received earlier and been stored, of the sub-beat step reproducing the optimum scanning instant and the difference is formed between the bit beat step number, which has been stored earlier and reproduces the position of the synchronising word, and the total number of the bit beat steps of the synchronising word recognition region and that - when the counter state lies below the predetermined number - the scanning of the received signal channel is set to the actually determined sub-beat step number without previous comparison with a sub-beat step number stored earlier, the difference is formed between the actually determined sub-beat step number without previous comparison with a sub-beat step number stored earlier and the total number of the bit beat steps of the synchronising word recognition region and the actually determined numbers of the bit beat step and of the sub-beat step are stored.

5. Method according to claim 4, characterised thereby, that the actually determined numbers of the bit beat step and of the sub-beat step, which indicate the position of the synchronising word in the synchronising word recognition region, are compared with the numbers, which have been derived from a signal channel received earlier and been stored, and a correction of the stored number is undertaken in the case of deviation of the actual numbers from the numbers stored earlier.

6. Method according to one of the preceding claims, characterised thereby, that when the synchronising word register has the counter state zero, the actual numbers of the bit beat step and of the sub-beat step, which indicate the position of the synchronising word in the synchronising word recognition region, are stored without comparison with numbers determined earlier.

7. Method according to claim 1, characterised thereby, that after the signal transit time between a mobile subscriber and the fixed station has been determined, it is signalled from the fixed station to the mobile subscriber to transmit his signals delayed in dependence on the signal transit time by so many bit beat steps relative to the beginning of the channel slot allocated to the mobile subscriber that the signal delay for the least possible distance of the mobile subscriber from the fixed station corresponds to the total duration of a given delay time range and the signal delay is correspondingly less for increasing distance.

8. Method according to claim 7, characterised thereby, that the delay time range standing at disposal is subdivided into several steps, to which the delay time of the signals to be transmitted can be set by the mobile subscriber.

9. Method according to one of the preceding claims, characterised thereby, that besides useful signal channels, organisation channels composed of short and standard telegrams are also transmitted between a mobile subscriber and the fixed station and that - on the basis of the transit time of the short telegrams, which has been determined in the fixed station - the signal delay to be set accordingly for the standard telegrams and the useful signal channels is communicated by way of standard telegrams from the fixed station to the mobile subscriber.

10. Method according to one of the preceding claims, characterised thereby, that changes in the signal delay to be set at the mobile subscriber during a useful signal channel transmission or on a change of the mobile subscriber to the fixed station of another radio cell, are communicated to him by way of a signalling channel accompanying the useful signal channel.

11. Method according to one of the preceding claims, characterised thereby, that a region for the transit time equalisation, which is greater by at least one bit beat step than one step of the settable delay time range, is provided in the time slots of the useful signal channels transmitted from the mobile subscriber to the fixed station and of the standard telegrams of the organisation channels.

**Revendications**

1. Procédé de cadrage des canaux de signal reçus par une station fixe d' un système radio mobile, émis par des abonnés mobiles et présentant des temps de propagation de signal différents, dans une trame préexistante de réception à multiplexage par répartition dans le temps divisée en plusieurs intervalles de temps de canal, chaque canal de signal débutant par un mot de synchronisation, caractérisé en ce que
   a) chacun des pas de fréquence de bit dont se compose la durée de la trame de réception est subdivisé en pas de fréquence élémentaires,
   b) chaque canal de signal reçu est échantillonné sur plusieurs pas de fréquence élémentaires au sein de tous les pas de fréquence de bit qui appartiennent à une zone de détection du mot de synchronisation prévue au début de chaque intervalle de temps de canal, dont la longueur du mot se compose des bits du mot de synchronisation et de plusieurs bits correspondant au temps de propagation maximal possible du signal, les valeurs échantillonnées étant numérisées,
   c) ces valeurs échantillonnées numérisées sont comparées avec l' image binaire du mot de synchronisation prédéterminé,
   d) dès que le mot de synchronisation a été détecté dans les valeurs échantillonnées numérisées dans une partie quelconque de la zone de détection du mot de synchronisation, on détermine dans quel pas de fréquence de bit décompté depuis le début de la zone de détection du mot de synchronisation se trouve le dernier bit du mot de synchronisation détecté correctement et dans quel pas de fréquence élémentaire décompté depuis le début du pas de fréquence de bit a été détectée une valeur échantillonnée représentant correctement la valeur binaire présente dans ce pas de fréquence de bit,
   e) le canal de signal reçu, dans tous les pas de fréquence de bit suivant le mot de synchronisation, est échantillonné dans le même pas de fréquence élémentaire déterminé préalablement pour le bon échantillonnage du mot de synchronisation,
   f) une différence est calculée à partir du pas de fréquence de bit déterminé préalablement qui indique la distance entre le dernier bit du mot de synchronisation et le début de la zone de détection du mot de synchronisation et à partir du nombre total de pas de fréquence de bit de la zone de détection du mot de synchronisation, chaque canal de signal reçu étant temporisé du nombre de pas de fréquence de bit correspondant à la différence de pas de fréquence de bit qui a été déterminée pour lui.

2. Procédé selon la revendication 1, caractérisé en ce que, lorsque plusieurs pas de fréquence élémentaires successifs d'un pas de fréquence de bit fournissent des valeurs échantillonnées représentant le même bit correct du mot de synchronisation de ce pas de fréquence de bit, on détermine le numéro du pas de fréquence élémentaire qui se trouve au centre de ces pas de fréquence élémentaires juxtaposés, et en ce que le canal de signal reçu n'est échantillonné à chaque pas de fréquence de bit suivant le mot de synchronisation que sur le pas de fréquence élémentaire portant ce numéro.

3. Procédé selon la revendication 2, caractérisé en ce que le mot de synchronisation du canal de signal reçu n'est échantillonné que tous les deux pas de fréquence élémentaires de chaque pas de fréquence de bit, en ce que, sur tous les pas de fréquence de bit occupés par le mot de synchronisation, le numéro du pas de fréquence élémentaire dans lequel apparaît la première valeur échantillonnée reproduisant correctement le bit considéré du mot de synchronisation est transcrit dans une mémoire tampon et en ce que ce numéro stocké dans la mémoire tampon est incrémenté à chaque nouvelle valeur échantillonnée reproduisant correctement le bit considéré du mot de synchronisation.

4. Procédé selon une des revendications précédentes, caractérisé en ce qu'un registre de comptage des mots de synchronisation affecté à chaque intervalle de temps de canal de la trame de réception est incrémenté lorsque le mot de synchronisation du canal de signal reçu affecté à l'intervalle de temps de canal qui lui correspond a été détecté correctement, et est décrémenté lorsque le mot de synchronisation n'a pas été détecté ou pas correctement, en ce que, lorsque la valeur du compteur se situe au-dessus d'un seuil prédéterminé, l'échantillonnage du canal de signal reçu est réglé sur le numéro du pas de fréquence élémentaire représentant l'instant d'échantillonnage optimal qui a été dérivé d'un canal de signal reçu antérieur puis mémorisé et la différence est calculée à partir du numéro du pas de fréquence de bit représentant la position du mot de synchronisation et du nombre total de pas de fréquence de bit de la zone de détection du mot de synchronisation, et en ce que, lorsque la valeur du compteur se situe au-dessous du nombre prédéterminé, l'échantillonnage du canal de signal reçu se fait sur le pas de fréquence élémentaire immédiatement déterminé, sans comparaison préalable avec un numéro de pas de fréquence élémentaire mémorisé antérieurement, que la différence est calculée à partir du nombre total de pas de fréquence de bit de la zone de détection du mot de synchronisation et du numéro de pas de fréquence de bit immédiatement déterminé, sans comparaison préalable avec un numéro de pas de fréquence de bit mémorisé antérieurement et que les numéros immédiatement déterminés du pas de fréquence de bit et du pas de fréquence élémentaire sont mémorisés.

5. Procédé selon la revendication 4, caractérisé en ce que les numéros immédiatement déterminés du pas de fréquence de bit et du pas de fréquence élémentaire qui indiquent la position du mot de synchronisation dans la zone de détection du mot de synchronisation sont comparés avec les numéros dérivés d'un canal de signal reçu antérieur et mémorisés et en ce que, en cas d'écart entre les numéros courants et les numéros antérieurs mémorisés, une correction des numéros mémorisés est opérée.

6. Procédé selon une des revendications précédentes, caractérisé en ce que, lorsque le registre de comptage des mots de synchronisation contient la valeur zéro, les numéros courants du pas de fréquence de bit et du pas de fréquence élémentaire indiquant la position du mot de synchronisation dans la zone de détection du mot de synchronisation sont mémorisés sans comparaison avec des numéros déterminés antérieurement.

7. Procédé selon la revendication 1, caractérisé en ce que, lorsque le temps de propagation du signal a été déterminé entre un abonné mobile et la station fixe, celle-ci signale à l'abonné mobile d'émettre ses signaux avec, en fonction du temps de propagation du signal, un retard d'un nombre tel de pas de fréquence de bit par rapport au début de l'intervalle de temps de canal affecté à l'abonné mobile que la temporisation du signal dans le cas de l'éloignement minimal entre l'abonné mobile et la station fixe corresponde à la durée totale de la zone de détection du mot de synchronisation prédéterminée et se réduise proportionnellement lorsqu'augmente la distance et le temps de propagation du signal.

8. Procédé selon la revendication 7, caractérisé en ce que l'intervalle de temps de temporisation disponible est subdivisé en plusieurs degrés qui peuvent être sélectionnés par l'abonné mobile pour la temporisation des signaux à émettre.

9. Procédé selon une des revendications précédentes, caractérisé en ce que l'on transmet entre un abonné mobile et une station fixe non seulement des canaux de signal utile mais aussi des canaux de signal de service qui se composent de télégrammes courts et de télégrammes standard et en ce que, sur la base du temps de propagation des télégrammes courts déterminé par la station fixe, celle-ci signale à l'abonné mobile par des télégrammes standard la temporisation du signal à appliquer aux télégrammes standards et aux canaux de signal utile.

10. Procédé selon une des revendications précédentes, caractérisé en ce que les variations de la temporisation du signal à appliquer par l'abonné mobile pendant la transmission d'un canal de signal utile ou en cas de passage de l'abonné mobile à la station fixe d'une autre cellule radioélectrique lui sont communiquées sur un canal de signalisation accompagnant le canal de signal utile.

11. Procédé selon une des revendications précédentes, caractérisé en ce qu'il est prévu dans les intervalles de temps des canaux de signal utile et des télégrammes standard des canaux de signal de service transmis entre l'abonné mobile et la station fixe une zone pour la compensation du temps de propagation qui est au moins plus longue d'un pas de fréquence de bit qu'un degré de la zone de détection du mot de synchronisation sélectionnable.

FIG.1

EP 0 192 809 B1

FIG.2

FIG.3

EP 0 192 809 B1